# FASCICULE DE BREVET EUROPEEN

(11) **EP 3 218 739 B1**
(45) Date de publication et mention de la délivrance du brevet: **14.08.2019**
(21) Numéro de dépôt: 15808714.8
(22) Date de dépôt: 12.11.2015
(51) Int. Cl.: G01S 13/93, G01S 7/02, B60R 19/02, B60R 19/48

(54) **PROCEDE DE FABRICATION D'UNE TRAPPE PAR DECOUPE**
VERFAHREN ZUR HERSTELLUNG EINER TÜR DURCH SCHNEIDEN
METHOD FOR PRODUCING A COVER BY CUTTING

(30) Priorité: 14.11.2014 FR 1461036
(43) Date de publication de la demande: 20.09.2017
(73) Titulaire: Compagnie Plastic Omnium, 69007 Lyon (FR)
(72) Inventeur: DEMANGE, Jean-Yves, F-01500 Amberieu En Bugey (FR); BARBIER, Pascal, F-01100 Oyonnax (FR); ANDRE, Gérald, F-01500 Amberieu En Bugey (FR)
(74) Mandataire: Andrieux, Benoît
(86) Numéro de dépôt international: PCT/FR2015/053052
(87) Numéro de publication internationale: WO 2016/075411

(56) Documents cités:
- EP-A2- 0 950 588
- DE-A1-102007 005 322
- DE-A1-102009 048 336
- FR-A1- 2 979 872

## Description

La présente invention concerne un procédé de fabrication d'une pièce automobile munie d'une trappe.

Dans certains cas, il est avantageux pour une pièce d'un véhicule qui est visible de l'extérieur d'être munie d'une trappe. Cette trappe permet par exemple, en s'ouvrant, d'avoir accès à un dispositif situé dans un logement sous cette trappe ou de donner à ce dispositif un accès vers l'extérieur. Une telle pièce est par exemple un parechoc, et la trappe peut permettre ainsi l'accès à un anneau d'accrochage, ou permettre à un dispositif de lavage d'atteindre les projecteurs.

Pour des raisons d'esthétique et d'aérodynamisme, il est nécessaire que la largeur de la ligne de séparation (jeu d'accostage) entre la trappe et le reste de la pièce soit la plus faible possible de façon à être la moins visible possible, notamment de l'extérieur du véhicule pour des pièces de carrosserie. Il est par ailleurs souvent exigé que la pièce et la trappe présentent un aspect le plus similaire possible, notamment quand elles sont peintes (colorimétrie, brillance, ...).

Actuellement de telles pièces destinées à être munies d'une trappe mobile ou amovible sont moulées, une ouverture étant réalisée, dans la pièce lors du moulage, pour recevoir la trappe. La trappe destinée à se loger dans cette fenêtre est produite séparément, par exemple par moulage et peinture, et assemblée ensuite dans cette ouverture. De par le processus d'injection (phénomène de retrait de la matière lors du refroidissement), la face visible de la pièce, au niveau de l'ouverture, et la face visible de de la trappe, présentent nécessairement des bords arrondis. Il s'avère que ces arrondis permettent en outre d'éviter la formation d'un bourrelet de peinture sur la pièce à la périphérie de l'ouverture, et à la périphérie de la trappe (effet de bord lors du dépôt de la peinture), lorsque la pièce et la trappe reçoivent sur leurs faces visibles une couche de peinture, ou un autre revêtement de finition.

Alternativement, l'ouverture peut être réalisée sur une pièce par poinçonnage après son moulage. Même dans ce cas il sera en général préférable d'arrondir ensuite les bords de l'ouverture, lorsque la pièce et la trappe reçoivent sur leurs faces visibles un revêtement.

De plus, la partie poinçonnée de la pièce constitue une chute qui doit être jetée.

Que l'ouverture soit réalisée par moulage ou par poinçonnage, la trappe reste donc à réaliser séparément, par exemple par moulage.

Les bords arrondis présentent l'inconvénient qu'ils augmentent le jeu perçu du côté de la face visible entre la pièce et la trappe, ce qui est indésirable pour des raisons d'aérodynamisme et d'esthétique.

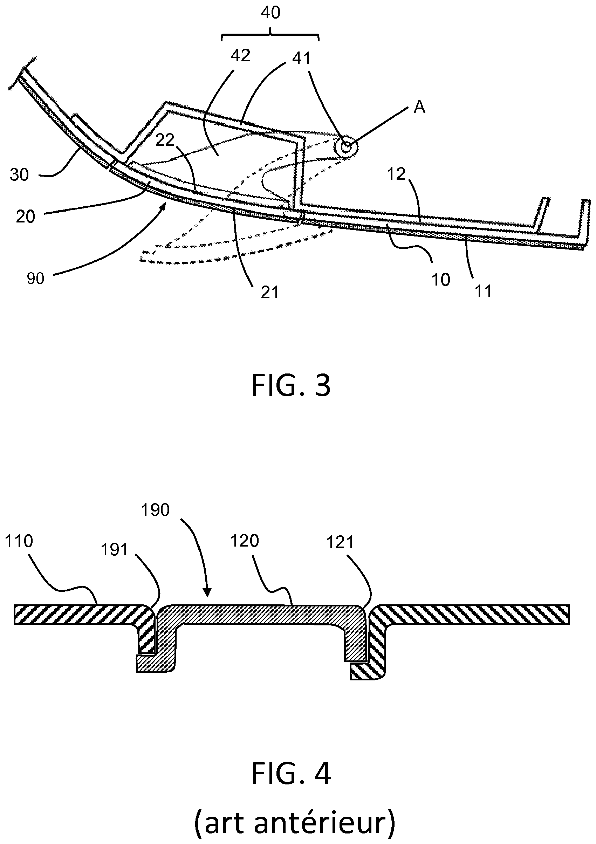

La situation est illustrée sur la figure 4 qui montre une pièce 110 avec une ouverture 190, obtenue par moulage. L'ouverture 190 est obturée par une trappe 120, moulée séparément. Le bord 191 de la face visible au niveau de l'ouverture 190 et le bord 121 de la face visible de la trappe 120 sont arrondis. DE1020090483336A1 décrit la fabrication d'une pièce automobile munie d'une trappe conformément aux étapes d'un procédé selon lesquelles on fournit une pièce moulée en forme de coque, présentant une première face et une seconde face opposée à ladite première face, et on enlève à l'aide d'un équipement de découpe une portion de ladite pièce de façon à y créer une ouverture telle que le bord de ladite première face au niveau de cette ouverture présente un angle vif.

La présente invention vise à remédier à ces inconvénients. L'invention vise à proposer un procédé qui permette d'intégrer une trappe dans une pièce en minimisant le jeu entre cette trappe et cette pièce.

Ce but est atteint grâce au fait que le procédé comprend les étapes suivantes :
(a) On fournit une pièce moulée en forme de coque, présentant une première face et une seconde face opposée à la première face,
(c) On enlève à l'aide d'un équipement de découpe une portion de la pièce de façon à y créer une ouverture telle que le bord de la première face au niveau de cette ouverture présente un angle vif, cette portion formant ladite trappe apte à obturer cette ouverture en position fermée, cette trappe ayant une première face dont le bord présente un angle vif,
(d) On intègre sur ladite seconde face de la pièce et sur la seconde face de la trappe des moyens de déplacement qui permettent un déplacement de la trappe par rapport à la pièce entre la position fermée et une position ouverte.

Grâce à ces dispositions, la fabrication de la trappe est simplifiée, car il n'est pas nécessaire que la trappe soit moulée séparément de la pièce. Une seule opération de moulage est donc requise. De plus, la découpe étant effectuée par un équipement de découpe, les bords de la première face au niveau de l'ouverture et de la première face de la trappe ne sont pas arrondis mais sont des arêtes vives, et par conséquent le jeu entre la pièce et la trappe est moins visible que dans le cas où ces bords sont arrondis. En outre, le fait que la pièce et que la trappe proviennent d'une pièce initiale identique assure que l'aspect de la face visible (première face) de cette pièce et de cette trappe sont rigoureusement identiques, ce qui contribue à masquer l'existence de la trappe (au contraire, dans l'art antérieur, la trappe peut présenter un aspect extérieur différent de la pièce bien que fabriquée avec la même matière, à cause de variabilité entre les lots de matière).

Avantageusement, entre l'étape (a) et l'étape (c), le procédé comprend une étape (b) où on dépose un revêtement sur la première face.

Ainsi, étant donné que la face visible de la pièce (et de la trappe) est déjà munie du revêtement avant la découpe de la trappe, il n'est plus nécessaire d'arrondir les bords de la face au niveau de l'ouverture et de la face de la trappe avant leur opération de revêtement (par exemple leur mise en peinture) pour éviter le phénomène/défaut d'effet de bord. Le jeu entre la trappe et la pièce est donc minimisé, et la présence d'une trappe est moins visible.

L'invention concerne également un ensemble comportant une pièce moulée en forme de coque, présentant une première face et une seconde face opposée à la première face, la pièce comprenant une ouverture.

Selon l'invention, l'ensemble comprend en outre une trappe apte à obturer l'ouverture en position fermée, et présentant une première face qui se situe, en position fermée, dans le prolongement de la première face de la pièce, et une seconde face opposée à la première face, la trappe étant découpée dans la pièce à l'aide d'un équipement de découpe de telle sorte que le bord de la première face au niveau de cette ouverture présente un angle vif, et le bord de la première face de la trappe présente un angle vif, l'ensemble comportant en outre des moyens de déplacement qui sont reliés aux secondes faces et qui permettent un déplacement de la trappe par rapport à la pièce entre la position fermée et une position ouverte.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1A illustre une première étape du procédé selon l'invention ;
- la figure 1B illustre une autre étape du procédé selon l'invention ;
- la figure 1C illustre une autre étape du procédé selon l'invention ;
- la figure 1D illustre une autre étape du procédé selon l'invention ;
- la figure 2 illustre un autre mode de réalisation du procédé selon l'invention ;
- la figure 3 est une vue en perspective d'une pièce avec une trappe obtenue par le procédé selon l'invention ;
- la figure 4 représente une pièce et une trappe fabriquées par un procédé selon l'art antérieur.

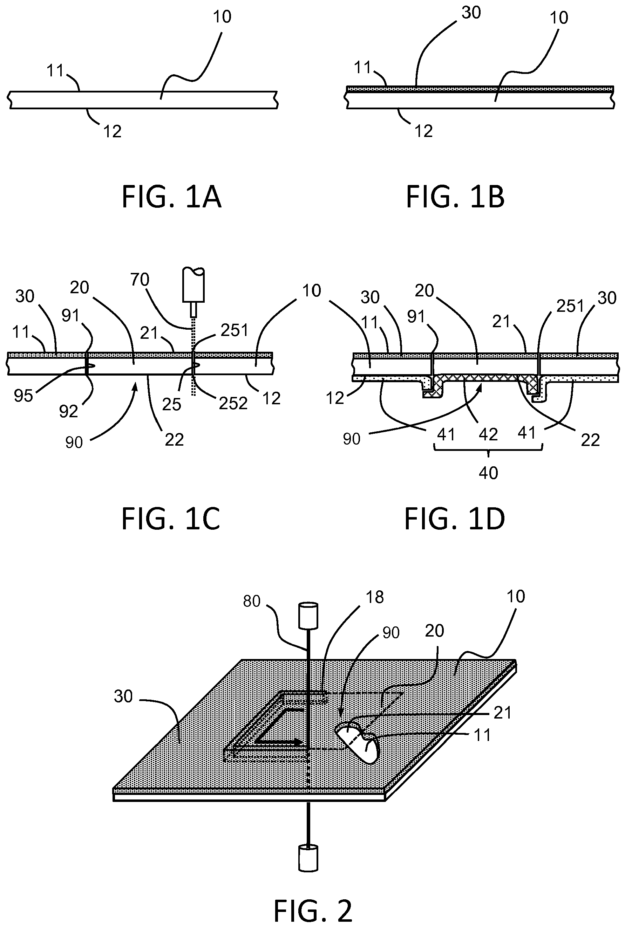

On fournit une pièce 10 qui est moulée en forme de coque. Une coque désigne une pièce galbée en trois dimensions dont une dimension (l'épaisseur) est très faible devant les deux autres (cette coque pouvant en cas de galbe nul être plane pour former une plaque) et qui présente une première face 11 et une seconde face 12 opposée à la première face 11 (étape (a), Figure 1A).

La première face 11 désigne la face qui est visible lors de l'utilisation de la pièce 10. Par exemple la pièce 10 est montée sur un véhicule de telle sorte que c'est la première face 11 qui est visible par un tiers situé à l'extérieur du véhicule, la seconde face 12 étant alors invisible.

Optionnellement, on dépose un revêtement 30 de finition sur la première face 11 (étape (b), Figure 1B). Le revêtement de finition 30 sur la pièce 10 (et par conséquent sur la trappe 20, voir ci-dessous) est par exemple un dépôt de matière par pulvérisation ou par immersion, par exemple un dépôt de peinture.

Alternativement, ce revêtement 30 est un film (protecteur ou décoratif) appliqué sur la pièce 10.

On décrit ci-dessous le cas où la première face 11 de la pièce 10 et la première face 21 de la trappe 20 (voir plus loin) présentent un revêtement 30.

Cependant, le procédé selon l'invention s'applique également au cas où ces premières faces ne présentent pas de revêtement.

On détache à l'aide d'un équipement de découpe une portion de la pièce 10 de façon à y créer une ouverture 90 telle que le bord 91 de la première face 11 au niveau de cette ouverture 90 présente un angle vif, cette portion formant la trappe 20 qui obture cette ouverture 90 (étape (c), Figure 1C).

Ainsi, la face latérale 95 de la pièce 10 délimitant l'ouverture 90 présente un bord au niveau de la première face 11 qui est le bord 91.

Par le fait que la face d'une portion d'une pièce présente un bord à angle vif, on entend que la face latérale délimitant cette face de cette portion forme avec cette face une arête vive (sans rayon) avec un angle compris strictement entre 0° et 180°, cet angle étant mesuré dans l'intérieur de la pièce (c'est-à-dire au travers de la matière de la pièce).

La trappe 20 découpée selon l'invention présente une première face 21 qui se situe dans le prolongement de la première face 11 de la pièce 10 au niveau de l'ouverture 90. De par le procédé de découpe selon l'invention, le bord 251 de la première face 21 présente un angle vif, et la face latérale 25 délimitant la trappe 20 présente un bord au niveau de la première face 21 qui est ce bord 251.

L'épaisseur du dépôt 30 étant faible devant l'épaisseur de la pièce 10 (et de la trappe 20), on considère que la première face 11 de la pièce 10 et la première face 21 de la trappe 20 sont confondues avec les faces externes du revêtement 30 déposé sur la pièce 10 et la trappe 20.

Selon un premier mode de réalisation de l'invention, illustré sur la figure 1C, cet équipement de découpe est un faisceau 70.

Selon l'invention, le terme « faisceau » désigne un rayon de particules ou d'énergie se propageant dans l'espace.

Le faisceau 70 étant rectiligne et se propageant en ligne droite, la face latérale 95 présente également un bord 92 avec un angle vif au niveau de la seconde face 12 de la pièce 10, et la face latérale 95 est droite (rectiligne) dans le sens de l'épaisseur découpée de la pièce. La face latérale 25 présente également un bord 252 avec un angle vif au niveau de la seconde face 22 de la trappe 20 opposée à la première face 21, et la face latérale 25 est droite (rectiligne) et parallèle à la face latérale 95 qui lui est en vis-à-vis.

Avantageusement, le faisceau 70 est perpendiculaire à la première face 11, en tout point de la ligne de découpe sur la face d'entrée du faisceau. Ainsi, la face latérale 95 est perpendiculaire à la première face 11 et à la seconde face 12, ce qui facilite le mouvement de la trappe 20 par rapport à la pièce 10.

Le faisceau 70 utilisé dans le procédé selon l'invention est tout faisceau qui est apte à découper une pièce.

Par exemple ce faisceau 70 est un faisceau laser.

Un faisceau laser présente l'avantage par rapport à d'autre faisceaux (et par rapport à un fil chaud, voir ci-dessous), comme l'ont montré les essais réalisés par l'inventeur, que les arêtes du bord 91 et du bord 92 de l'ouverture 90 et les arêtes du bord 251 et du bord 252 de la trappe 20 sont plus vives et que les surfaces de la face latérale 95 de l'ouverture 90 et de la face latérale 25 de la trappe 20 sont plus lisses.

Alternativement, le faisceau 70 est un jet d'eau le plus étroit possible projeté à une pression très supérieure à la pression atmosphérique, ou un jet d'air chargé de particules aptes à découper la pièce 10.

Selon un autre mode de réalisation de l'invention, l'équipement de découpe est un fil 80 chauffé à une température supérieure à la température de fusion du matériau constituant la pièce 10, comme illustré sur la figure 2. Sur la figure 2 le revêtement 30 est enlevé localement afin de montrer la première face 11 de la pièce 10 et la première face 21 de la trappe 20 en cours de découpage.

Pour découper la trappe 20 dans la pièce 10, on perce un trou 18 dans la pièce 10 (recouverte du revêtement 30), dans lequel on fait passer le fil 80. Puis on chauffe le fil 80, et on translate ce fil 80 parallèlement à lui-même dans le plan de la première face 11 de la pièce 10 jusqu'à revenir au trou 18 de façon à séparer une région de la pièce 10 du reste de la pièce 10, cette région délimitée par le trajet du fil 80 formant la trappe 20.

En général, et notamment dans le cas de grande séries de pièces à fabriquer, il est difficile qu'en pratique le diamètre du trou percé par lequel on fait passer le fil ne soit pas supérieur à la largeur désirée de la ligne de découpe.

Dans ce cas, une des solutions consiste à percer la pièce 10 de façon grossière afin de faire passer aisément le fil, puis à découper dans la trappe 20 une échancrure qui englobe l'endroit du perçage, afin d'éliminer cet endroit et d'obtenir au final un bord 251 de trappe 20 qui soit d'aspect acceptable et avec une arête vive. L'échancrure ainsi fabriquée servira par exemple de prise pour soulever manuellement la trappe 20.

Ainsi, grâce à l'invention, on obtient un bord 91 de la première face 11 de la pièce 10 au niveau de l'ouverture 90 et un bord 251 de la première face 21 de la trappe 20 qui présentent un angle vif, y compris dans le présent cas où ces premières faces sont recouvertes d'un revêtement.

Après ou avant la découpe de la trappe 20, on intègre sur la seconde face 12 de la pièce 10 et sur la seconde face 22 de la trappe 20 des moyens de déplacement 40 qui permettent un déplacement de la trappe 20 par rapport à la pièce 10 entre une position fermée et une position ouverte (étape (d), Figure 1D).

Les moyens de déplacement 40 permettent à la fois le positionnement et le maintien de la trappe 20 sur la pièce 10 dans sa position fermée en assurant l'affleurement de la première face 11 de la pièce 10 et de la première face 21 de la trappe 20, et la répartition des jeux entre la trappe 20 et la pièce 10, mais permettent aussi l'ouverture de la trappe 20 par rapport à la pièce 10.

Ainsi, la première face 21 (face visible) de la trappe 20, lorsqu'elle est en position fermée, se situe dans le prolongement de la première face 11 de la pièce 10.

En outre, si l'épaisseur de la pièce 10 est sensiblement uniforme, la seconde face 22 de la trappe 20 se situe dans le prolongement de la seconde face 12 de la pièce 10.

Les moyens de déplacement 40 sont intégrés sur la seconde face 12 de la pièce 10 et sur la seconde face 22 de la trappe 20 (et non sur la première face 11 de la pièce 10 et la première face 21 de la trappe 20) afin de ne pas être visibles par un tiers situé à l'extérieur du véhicule sur lequel est monté la pièce 10.

Les moyens de déplacement 40 peuvent être rapportés et fixés sur la pièce 10 et sur la trappe 20. Ils peuvent alternativement venir directement, en partie ou en totalité, du moulage de la pièce et/ou de la trappe.

Lorsque que les moyens de déplacement 40 sont fixés sur la pièce 10 et sur la trappe 20, ils peuvent l'être par tout moyen du moment que cette fixation ne génère pas de défaut visuel sur la première face 11 de la pièce 10 ni sur la première face 21 de la trappe 20. Ces moyens de fixation comprennent notamment le soudage (ultrasons, laser...), et le collage ou l'adhésivage.

Par exemple, comme représenté sur la figure 1D, les moyens de déplacement 40 comprennent un premier support 41 fixé sur la seconde face 12 de la pièce 10 et un second support 42 fixé sur la seconde face 22 de la trappe 20. Le premier support 41 et le second support 42 sont articulés entre eux de façon à permettre un déplacement de la trappe 20 par rapport à la pièce 10, comme expliqué ci-dessous.

La trappe 20 présente une position fermée et une position ouverte. En position fermée, la trappe 20 obture entièrement l'ouverture 90 dans la pièce 10. La trappe 20 est apte à se déplacer par rapport au reste de la pièce 10 entre cette position fermée et une position ouverte grâce aux moyens de déplacement 40.

Par exemple la trappe 20 dissimule un équipement tel qu'un radar, une antenne, une poignée de porte, situé sous la trappe 20. Lorsque la trappe 20 est en position ouverte, cet équipement devient visible par un tiers situé à l'extérieur du véhicule sur lequel est montée la pièce 10.

Par exemple la trappe 20 est un volet aérodynamique qui est apte à être orienté par rapport à la pièce 10 afin d'améliorer l'aérodynamisme de la pièce 10 lorsque cette pièce 10 est en mouvement.

La trappe 20 est destinée à obturer l'ouverture 90 de façon à rendre moins visible, pour un observateur, la ligne de séparation constituant le jeu de montage entre la trappe 20 et la pièce 10 lorsque la trappe 20 est en position fermée. Grâce au procédé selon l'invention, le bord 91 de la première face 11 de la pièce 10 et le bord 251 de la première face 21 de la trappe 20 sont des angles vifs, et cette ligne de séparation est donc moins visible que dans l'art antérieur où le bord 91 et le bord 251 étaient des arrondis car cette ligne était alors plus large au niveau des premières faces (faces visibles).

L'utilisation d'un faisceau de découpe étroit ou d'un fil de découpe fin réduit la largeur du jeu de montage entre la pièce 10 et la trappe 20.

Avantageusement, le faisceau ou le fil de découpe présente un diamètre inférieur à 1 mm, idéalement inférieur à 0,5 mm.

Ainsi la largeur du jeu de montage entre la trappe 20 et la pièce 10 (distance entre le bord 91 de l'ouverture 90 et le bord 251 de la trappe 20 au niveau de la première face 11 de la pièce 10) est inférieure à 1 mm, idéalement inférieur à 0,5 mm.

En conséquence la visibilité du jeu de montage entre la trappe 20 et la pièce 10 est diminuée.

De plus, le bord 91 de l'ouverture 90 au niveau de la première face 11 de la pièce 10 et le bord 251 de la trappe 20 au niveau de sa première face 21 sont des angles vifs.

Ainsi, selon l'invention, le jeu de montage est le moins visible possible, la présence de la trappe 20 est moins identifiable, et la pièce 10 apparait pour un observateur comme formant un seul bloc continu avec la pièce 10.

La figure 3 illustre ces moyens de déplacement 40 dans le cas où ces moyens forment une articulation qui permet un basculement de la trappe 20 par rotation autour d'un axe A vers l'extérieur (c'est-à-dire dans la direction de la seconde face 12 vers la première face 11 de la pièce 10).

Ainsi, les moyens de déplacement 40 comprennent d'une part un premier support 41 avec une base fixée sur la seconde face 12 de la pièce 10 et formant un logement sous la trappe 20. Le premier support 41 comprend en outre un arbre (non-représenté) fixe par rapport à la pièce 10 et s'étendant selon un axe A parallèle à la surface dans laquelle s'étend la pièce 10. L'axe A est donc perpendiculaire au plan de la feuille sur la figure 3.

Les moyens de déplacement 40 comprennent d'autre part un second support 42 avec une base fixée sur la seconde face 22 de la trappe 20, et un bras (visible sur la figure 3) qui s'étend vers l'intérieur (ce bras est donc invisible pour un observateur situé à l'extérieur de la pièce 10, c'est-à-dire du côté de la première face 11 et de la première face 21, lorsque la trappe 20 est en position fermée). L'extrémité de ce bras présente un moyeu apte à pivoter autour de l'arbre du premier support 41 (autour de l'axe A), formant ainsi une liaison pivot.

Ainsi, par l'intermédiaire de cette liaison, le premier support 41 et le second support 42 sont articulés entre eux pour permettre un basculement de la trappe 20 par rapport à la pièce 10, vers l'extérieur. Ce basculement s'effectue par rotation du bras du second support 42 autour de l'axe A, depuis la position en traits pleins (position fermée) vers la position en traits pointillés (position ouverte) sur la figure 3.

En position ouverte, la trappe 20 révèle un équipement (non représenté) logé dans le logement formé par le premier support 41 sous la trappe 20.

Alternativement, l'articulation permet un basculement de la trappe 20 vers l'intérieur (c'est-à-dire dans la direction de la première face 11 vers la seconde face 12 de la pièce 10).

En variante, les moyens de déplacement 40 permettent, par exemple par un ensemble de guides, un enfoncement de la trappe 20 vers l'intérieur perpendiculairement à la première face de la pièce 10, puis une translation de la trappe 20 parallèlement à la pièce 10, de manière à révéler et libérer l'ouverture 90. Cet escamotage de la trappe 20 en position ouverte permet par exemple l'accès à un équipement situé à l'intérieur de la pièce 10.

En variante, les moyens de déplacement 40 se prolongent par des interfaces techniques tels que des clips, passages rivets, fûts de vissage ou bouterolles, nervures d'agrafage. Ces interfaces techniques pourront servir d'ancrage à d'autres composants, tels que des grilles, des renforts de crosse, des absorbeurs.

## Revendications

1. Procédé de fabrication d'une pièce (10) automobile munie d'une trappe (20), ce procédé étant **caractérisé en ce qu'**il comprend les étapes suivantes :
(a) On fournit une pièce (10) moulée en forme de coque, présentant une première face (11) et une seconde face (12) opposée à ladite première face (11),
(c) On enlève à l'aide d'un équipement de découpe une portion de ladite pièce (10) de façon à y créer une ouverture (90) telle que le bord (91) de ladite première face (11) au niveau de cette ouverture présente un angle vif, cette portion formant ladite trappe (20) apte à obturer cette ouverture (90) en position fermée, cette trappe (20) ayant une première face (21) dont le bord (251) présente un angle vif,
(d) On intègre sur ladite seconde face (12) de la pièce (10) et sur ladite seconde face (22) de la trappe (20) des moyens de déplacement (40) qui permettent un déplacement de ladite trappe (20) par rapport à ladite pièce (10) entre ladite position fermée et une position ouverte.

2. Procédé selon la revendication 1 **caractérisé en ce que**, entre l'étape (a) et l'étape (c), le procédé comprend une étape (b) où on dépose un revêtement (30) sur ladite première face (11).

3. Procédé selon la revendication 1 ou 2 **caractérisé en ce que** ledit équipement de découpe est un faisceau (70).

4. Procédé selon la revendication 3 **caractérisé en ce que** ledit faisceau (70) présente un diamètre inférieur à 1 mm.

5. Procédé selon la revendication 4 **caractérisé en ce que** ledit faisceau (70) est un faisceau laser.

6. Procédé selon la revendication 1 **caractérisé en ce que** ledit équipement de découpe est un fil (80) chauffé à une température supérieure à la température de fusion du matériau constituant ladite pièce (10).

7. Procédé selon la revendication 6 **caractérisé en ce que** ledit fil (80) présente un diamètre inférieur à 1 mm.

8. Ensemble comportant une pièce (10) moulée en forme de coque, présentant une première face (11) et une seconde face (12) opposée à ladite première face (11), ladite pièce (10) comprenant une ouverture (90), ledit ensemble étant **caractérisé en ce qu'**il comprend en outre une trappe (20) apte à obturer ladite ouverture (90) en position fermée, et présentant une première face (21) qui se situe, en position fermée, dans le prolongement de ladite première face (11) de la pièce (10), et une seconde face (22) opposée à ladite première face (21), ladite trappe (20) étant découpée dans la pièce (10) à l'aide d'un équipement de découpe de telle sorte que le bord (91) de ladite première face (11) au niveau de cette ouverture présente un angle vif" et le bord (251) de ladite première face (21) de ladite trappe (20)présente un angle vif, ledit ensemble comportant en outre des moyens de déplacement (40) qui sont fixés sur lesdites secondes faces (12, 22) qui permettent un déplacement de ladite trappe (20) par rapport à ladite pièce (10) entre ladite position fermée et une position ouverte.

9. Ensemble selon la revendication 8 **caractérisé en ce que** ladite première face (11) de la pièce (10) et ladite première face (21) de la trappe sont recouvertes d'un revêtement (30).

10. Ensemble selon la revendication 8 ou 9 **caractérisé en ce que** la largeur du jeu de montage entre la trappe 20 et la pièce 10 est inférieure à 1 mm.

11. Ensemble selon l'une quelconques des revendications 8 à 10 **caractérisé en ce que** les moyens de déplacement (40) comprennent un premier support (41) fixé sur ladite seconde face (12) de la pièce (10) et un second support (42) fixé sur ladite seconde face (22) de la trappe (20).

12. Ensemble selon l'une quelconque des revendications 8 à 11, **caractérisé en ce que** lesdits moyens de déplacement (40) se prolongent par des interfaces techniques.

## Patentansprüche

1. Verfahren zur Herstellung eines Kraftfahrzeug-Teils (10), das mit einer Klappe (20) versehen ist, wobei das Verfahren **dadurch gekennzeichnet ist, dass** es die folgenden Schritte umfasst:
a) Bereitstellen eines schalenförmig gegossenen Teils (10), das eine erste Fläche (11) und eine zweite Fläche (12), die der ersten Fläche (11) gegenüberliegt, aufweist,
c) Entfernen mit Hilfe einer Schneidevorrichtung eines Teilstücks von dem Teil (10), so dass eine Öffnung (90) erzeugt wird, derart, dass der Rand (91) der ersten Fläche (11) im Bereich dieser Öffnung einen spitzen Winkel darstellt, wobei dieses Teilstück die Klappe (20) bildet, die in der Lage ist, diese Öffnung (90) in Schließstellung zu verschließen, wobei diese Klappe (20) eine erste Fläche (21) aufweist, deren Rand (251) einen spitzen Winkel aufweist,
d) Integrieren, in die zweite Fläche (12) des Teils (10) und in die zweite Fläche (22) der Klappe (20), von Verschiebungsmitteln (40), die eine Verschiebung der Klappe (20) relativ zu dem Teil (10) zwischen einer Schließstellung und einer Öffnungsstellung gestatten.

2. Verfahren nach Anspruch 1, **dadurch gekennzeichnet, dass** das Verfahren zwischen dem Schritt a) und dem Schritt c) einen Schritt b) umfasst, bei dem eine Verkleidung (30) auf der ersten Fläche (11) aufgebracht wird.

3. Verfahren nach Anspruch 1 oder 2, **dadurch gekennzeichnet, dass** die Schneidevorrichtung ein Strahl (70) ist.

4. Verfahren nach Anspruch 3, **dadurch gekennzeichnet, dass** der Strahl (70) einen Durchmesser kleiner als 1 mm aufweist.

5. Verfahren nach Anspruch 4, **dadurch gekennzeichnet, dass** der Strahl (70) ein Laserstrahl ist.

6. Verfahren nach Anspruch 1, **dadurch gekennzeichnet, dass** die Schneidevorrichtung ein Draht (80) ist, der auf eine Temperatur erhitzt wird, die höher ist als die Schmelztemperatur des Materials, aus dem das Teil (10) besteht.

7. Verfahren nach Anspruch 6, **dadurch gekennzeichnet, dass** der Draht (80) einen Durchmesser kleiner als 1 mm aufweist.

8. Anordnung, die ein schalenförmig gegossenes Teil (10) aufweist, das eine erste Fläche (11) und eine zweite Fläche (12), die der ersten Fläche (11) gegenüberliegt, aufweist, wobei das Teil (10) eine Öffnung (90) umfasst, wobei die Anordnung **dadurch gekennzeichnet ist, dass** sie ferner eine Klappe (20) umfasst, die in der Lage ist, die Öffnung (90) in Schließstellung zu verschließen, und eine erste Fläche (21) aufweist, die sich, in Schließstellung, in der Verlängerung der ersten Fläche (11) des Teils (10) befindet, und eine zweite Fläche (22) aufweist, die der ersten Fläche (21) gegenüberliegt, wobei die Klappe (20) aus dem Teil (10) mit Hilfe einer Schneidevorrichtung ausgeschnitten ist, derart, dass der Rand (91) der ersten Fläche (11) im Bereich dieser Öffnung einen spitzen Winkel aufweist und der Rand (251) der ersten Fläche (21) der Klappe (20) einen spitzen Winkel aufweist, wobei die Anordnung ferner Verschiebungsmittel (40) aufweist, die an den zweiten Flächen (21, 22) befestigt sind und eine Verschiebung der Klappe (20) relativ zu dem Teil (10) zwischen einer Schließstellung und einer Öffnungsstellung gestatten.

9. Anordnung nach Anspruch 8, **dadurch gekennzeichnet, dass** die erste Fläche (11) des Teils (10) und die erste Fläche (21) der Klappe mit einer Verkleidung (30) bedeckt sind.

10. Anordnung nach Anspruch 8 oder 9, **dadurch gekennzeichnet, dass** die Breite des Montagespiels zwischen der Klappe (20) und dem Teil (10) kleiner als 1 mm ist.

11. Anordnung nach einem der Ansprüche 8 bis 10, **dadurch gekennzeichnet, dass** die Verschiebungsmittel (40) eine erste Halterung (41), die an der zweiten Fläche (12) des Teils (10) befestigt ist, und eine zweite Halterung (42), die an der zweiten Fläche (22) der Klappe (20) befestigt ist, umfassen.

12. Anordnung nach einem der Ansprüche 8 bis 11, **dadurch gekennzeichnet, dass** die Verschiebungsmittel (40) sich über technische Schnittstellen fortsetzen.

## Claims

1. Method for producing a motor vehicle part (10) provided with a cover (20), this method being **characterised in that** it comprises the following steps:
(a) Supplying a part (10) moulded in the shape of a shell, having a first side (11) and a second side (12) opposite said first side (11),
(c) Removing, using cutting equipment, a portion of said part (10) so as to create an opening (90) therein such that the edge (91) of said first side (11) at this opening has a sharp angle, this portion forming said cover (20) adapted to block this opening (90) in the closed position, this cover (20) having a first side (21) whose edge (251) has a sharp angle,
(d) Integrating on said second side (12) of the part (10) and on said second side (22) of the cover (20) displacement means (40) for displacing said cover (20) relative to said part (10) between said closed position and an open position.

2. Method according to claim 1, **characterised in that**, between step (a) and step (c), the method comprises a step (b) during which a coating (30) is deposited on said first side (11).

3. Method according to claim 1 or 2, **characterised in that** said cutting equipment is a beam (70).

4. Method according to claim 3, **characterised in that** said beam (70) has a diameter of less than 1 mm.

5. Method according to claim 4, **characterised in that** said beam (70) is a laser beam.

6. Method according to claim 1, **characterised in that** said cutting equipment is a wire (80) heated to a temperature greater than the melting point of the material forming said part (10).

7. Method according to claim 6, **characterised in that** said wire (80) has a diameter of less than 1 mm.

8. Assembly comprising a part (10) moulded in the shape of a shell, having a first side (11) and a second side (12) opposite said first side (11), said part (10) comprising an opening (90), said assembly being **characterised in that** it further comprises a cover (20) adapted to block said opening (90) in the closed position, and having a first side (21) located, in the closed position, in the extension of said first side (11) of the part (10), and a second side (22) opposite said first side (21), said cover (20) being cut in the part (10) using cutting equipment such that the edge (91) of said first side (11) at this opening has a sharp angle, and the edge (251) of said first side (21) of said cover (20) has a sharp angle, said assembly further comprising displacement means (40) which are attached to said second sides (12, 22) for displacing said cover (20) relative to said part (10) between said closed position and an open position.

9. Assembly according to claim 8, **characterised in that** said first side (11) of the part (10) and said first side (21) of the cover are covered with a coating (30).

10. Assembly according to claim 8 or 9, **characterised in that** the width of the assembly clearance between the cover 20 and the part 10 is less than 1 mm.

11. Assembly according to any one of claims 8 to 10, **characterised in that** the displacement means (40) comprise a first support (41) attached to said second side (12) of the part (10) and a second support (42) attached to said second side (22) of the cover (20).

12. Assembly according to any one of claims 8 to 11, **characterised in that** said displacement means (40) are extended by technical interfaces.
